# EUROPÄISCHE PATENTANMELDUNG

(11) **EP 0 684 430 A2**
(43) Veröffentlichungstag der Anmeldung: **29.11.1995**
(21) Anmeldenummer: 95105677.9
(22) Anmeldetag: 14.04.1995
(51) Int. Cl.: F24F 11/00, F24F 7/06

(54) **Rechnergesteuerte Absaugvorrichtung für Rottehallen**

(30) Priorität: 26.05.1994 DE 4418409
(71) Anmelder: METALLGESELLSCHAFT AG, D-60323 Frankfurt am Main (DE)
(72) Erfinder: Dolle, Lothar, D-44627 Herne (DE); Vollmer, Friedel, D-44652 Herne (DE)

(57) **Zusammenfassung**

Die vorliegende Erfindung betrifft eine rechnergesteuerte Absaugvorrichtung für Rottehallen mit einer oder mehreren Hauptsammelleitungen (1), die mit einem oder mehreren Absaugmodulen (2) über jeweils einen flexiblen Schlauch (3) in Verbindung stehen, wobei ein Absaugmodul (2) ein oder mehrere Absaughauben (4) aufweist, die Hauptsammelleitungen (1) am Ansatz eines flexiblen Schlauchs (3) eine Drosselklappe (6) aufweisen, die Module (2) über Hubzüge (7) verstellbar sind und die Hauptsammelleitungen (1) mit einem Abluftventilator verbunden sind.

## Beschreibung

Die vorliegende Erfindung betrifft eine rechnergesteuerte Absaugvorrichtung für Rottehallen. Erfindungsgemäß ist die Verwendung der rechnergesteuerten Absaugvorrichtung in geschlossenen oder überdachten Nachrottehallen sowie in Intensivrottehallen zur Erzeugung von Kompost aus Bioabfall vorgesehen.

Rotten, insbesondere Nachrotten, wobei Kompost aus Bioabfall gewonnen wird, müssen aufgrund der gesetzlichen Auflagen hinsichtlich der Geruchsemission für den Betrieb von Bioabfallkompostierungsanlagen so gestaltet werden, daß sie diesen Anforderungen genügen. Nach dem zur Zeit allgemein angewandten Verfahren werden Nachrotten in geschlossenen Hallen für die Nachrottezeit bis zur abgeschlossenen Kompostierung gehalten. In geschlossenen Hallen müssen stets große Luftvolumina, gegeben durch die vorgeschriebene Luftwechselfrequenz, abgesaugt, desodoriert und abgeführt werden. Die geschlossenen Hallen können aufgrund der mit C0₂ gesättigten Atmosphäre nicht betreten werden. Die Anlagen und Einrichtungen werden in den geschlossenen Hallen außerdem durch die hohe H₂0-Konzentration sehr stark belastet, da die Korrosion stark voranschreitet.

Aufgabe der vorliegenden Erfindung ist es, eine Absaugvorrichtung für Rottehallen bereitzustellen, die wirtschaftlich und umweltschonend arbeitet und mit der die Korrosion in den Rottehallen erheblich herabgesetzt wird.

Die der vorliegenden Erfindung zugrundeliegende Aufgabe wird durch eine rechnergesteuerte Absaugvorrichtung für Rottehallen gelöst mit einer oder mehreren Hauptsammelleitungen, die mit einem oder mehreren Absaugmodulen über jeweils einen flexiblen Schlauch in Verbindung stehen, wobei ein Absaugmodul ein oder mehrere Absaughauben aufweist, die Hauptsammelleitungen am Ansatz eines flexiblen Schlauchs eine Drosselklappe aufweisen, die Absaugmodule über Hubzüge verstellbar sind und die Hauptsammelleitungen mit einem Abluftventilator verbunden sind.

Mit der erfindungsgemäßen Absaugevorrichtung erfolgt eine vollautomatische Absaugung einer Rottehalle. Die Module werden mittels elektromechanischer Hubeinrichtungen über dem Emissionsort abgelassen, wobei die Feinabstimmung mit infrarot- oder lasergesteuerter Höhenverstellung erfolgt. Dadurch wird in den Bereichen der Halle, in denen stoßweise Emissionen auftreten, gezielt die Abluft mit dem jeweiligen Modul abgesaugt. Die Abluftmenge wird in Abhängigkeit von der jeweiligen Emission geregelt. Die Absaugmodule sind über einen flexiblen und saugstabilen Schlauch mit der Hauptsammelleitung verbunden und werden auf die Emissionsorte nach Bedarf abgesenkt. Die erfindungsgemäße Vorrichtung ermöglicht die gezielte Erfassung der Emission, die bei Vorgängen wie der Entladung, Umsetzung, Absiebung, Verladung und der Konfektionierung der Rotte entsteht. Die Abluft wird nach der gezielt erfaßten Emission regional abgesaugt. Die Einhaltung der punktuell hohen Luftwechselraten wird durch die Drosselklappen in der Hauptsammelleitung bewirkt.

Die C0₂-Sättigung und die hohe H₂0-Konzentration werden durch gezielte Absaugung stark vermindert, und die Korrosion der Hallen und der Einrichtungen wird stark zurückgedrängt.

Eine bevorzugte Ausgestattung der Erfindung ist eine rechnergesteuerte Absaugvorrichtung, wobei die Drosselklappen, die Hubzüge und der Abluftventilator von einem Leitrechner geregelt werden, der Abluftventilator vom Leitrechner mittels eines Frequenzrichters stufenlos geregelt und die Höhe der Module über Hubzüge oberhalb dem Emmissionsort vom Leitrechner mittels Infrarot-oder Laserbewegungserfassung stufenlos eingestellt wird.

Die auftretende Emission, hervorgerufen durch anorganische und organische Abbaustoffe, wird gemessen und dem Rechner zur Auswertung übermittelt. Anschließend erfolgt die programmierte Regelung der Absaugung. Zusätzlich wird durch die Drosselklappen in der Hauptsammelleitung die Luftwechselrate im Bereich der Rottemieten geregelt. Die Bewegungen wie LKW-Verkehr, Kipp- und Umsetzvorgänge werden durch Infrarot-oder Lasererfassung überwacht. Die entsprechenden Absaugmodule werden automatisch angehoben, um den freien Durchgang zu ermöglichen. Die Absaugmodule werden mit Beendigung der Bewegung in ihre Ausgangsposition zurückgeführt. Der Abluftventilator wird vom Leitrechner nach Volumenstromerfassung zur Abluftdosierung über einen Frequenzrichter stufenlos geregelt.

Als Leitrechner dient ein Personalcomputer mit einer SPS (Speicherprogrammierbare Steuerung) zur Steuerung der Drosselklappen, der Hubzüge sowie des Abluftventilators. Über den Personalcomputer werden die Absaugvorrichtungen über nicht benötigten Flächen abgeschaltet. Bei neuangelegten Mieten werden die Luftwechselraten individuell eingestellt. Abluftmengen, die desodoriert werden, werden erfaßt und abgespeichert.

Eine bevorzugte Ausgestaltung der Erfindung ist eine rechnergesteuerte Absaugvorrichtung, wobei die Hauptsammelleitungen, die Absaugmodule, die Absaughauben und der Absaugventilator aus Edelstahl bestehen. Die Hauptsammelleitungen bestehen aus dünnwandigen Edelstahlrohren, wie z.B. Wickelfalzrohr NW 600/MAT 1.4571, die an der Dechenkonstruktion der Nachrottehallen montiert werden. Die Edelstahlausführung der Teile bewirkt zusätzlich eine stärkere Widerstandsfähigkeit gegenüber Korrosion.

Eine bevorzugte Ausgestaltung der Erfindung ist eine rechnergesteuerte Absaugvorrichtung, wobei die abgesaugte Abluft einem Biofilter oder als Prozeßluft der Kompostierung zugeführt wird. Dem Absaugventilator wird erfindungsgemäß ein Biofilterbeet nachgeschaltet. Die desodorierte Abluft wird aus dem Biofilterbeet abgeführt. Erfindungsgemäß wird die Abluft wirksam gereinigt oder in den Kompostierungsprozeß zurückgeführt. Diese Maßnahmen machen die Vorrichtung besonders wirtschaftlich.

Erfindungsgemäß ist die Verwendung der rechnergesteuerten Absaugevorrichtung in geschlossenen oder überdachten Nachrottehallen sowie im Intensivrottehallen zur Erzeugung von Kompost aus Bioabfall vorgesehen. Bei überdachten Nachrottemieten ist die Halle mit einer umlaufenden Attika nur insoweit zu versehen, daß die Leistung der Absaugmodule durch auftretende Seitenwinde nicht beeinträchtigt wird.

Die erfindungsgemäße rechnergesteuerte Absaugvorrichtung ermöglicht eine wirtschaftliche und umweltfreundliche Betriebsführung insbesondere für Nachrotteflächen, die in Abfallbehandlungsanlagen angelegt werden. Die Abfallbehandlungsanlagen befinden sich oftmals an sensiblen Standorten. Es müssen daher für ihre Betreibung strenge gesetzliche Auflagen erfüllt werden, was mit der erfindungsgemäßen Vorrichtung ermöglicht wird.

Die Erfindung wird nachfolgend anhand einer Zeichnung näher erläutert. Es zeigen:

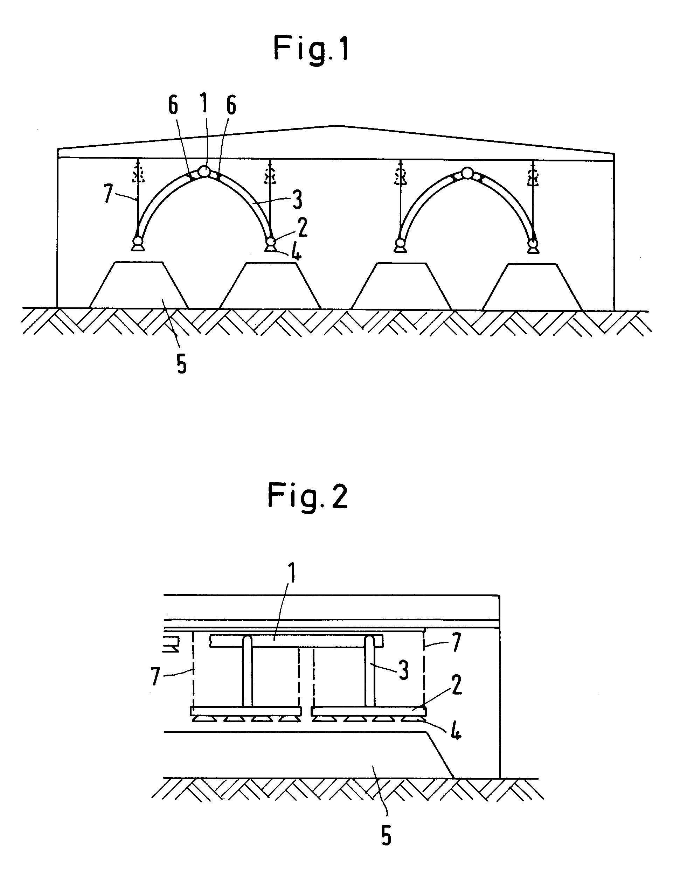

Fig. 1: die Frontansicht einer überdachten Nachrottehalle mit einer erfindungsgemäßen rechnergesteuerten Absaugevorrichtung,
Fig. 2: Seitenansicht der in Fig. 1 als Frontansicht dargestellten Nachrottehalle In Fig. 1 sind Nachrotten (5) in einer überdachten Halle dargestellt. Die Hauptsammelleitungen (1) sind an der Decke befestigt. Mit den Hauptsammelleitungen (1) sind flexible und saugstabile Schläuche (3) verbunden. Die Schläuche (3) enden über den Nachrottemieten (5). An den Enden eines Schlauches (3) ist ein Absaugmodul (2) angebracht. Jedes Absaugmodul (2) trägt mehrere Absaughauben (4). Die Absaughauben (4) sind über den Nachrottemieten (5) aufgehängt. Am Ansatz der Schläuche (3) an der Hauptsammelleitung (1) sind in den Schläuchen (3) Drosselklappen (6) angebracht. Die Schläuche (3) sind mittels elektromotorisch betriebener Hubzüge (7) an der Decke aufgehängt. In Fig. 2 ist dargestellt, daß an jedem Absaugmodul (2), mehrere, in diesem Fall vier Absaughauben (4), angebracht sind. Die Hauptsammelleitungen (1) sind mit einem nicht gezeigten Absaugventilator verbunden.

## Patentansprüche

1. Rechnergesteuerte Absaugvorrichtung für Rottehallen mit einer oder mehreren Hauptsammelleitungen (1), die mit einem oder mehreren Absaugmodulen (2) über jeweils einen flexiblen Schlauch (3) in Verbindung stehen, wobei ein Absaugmodul (2) ein oder mehrere Absaughauben (4) aufweist, die Hauptsammelleitungen (1) am Ansatz eines flexiblen Schlauchs (3) eine Drosselklappe (6) aufweisen, die Absaugmodule (2) über Hubzüge (7) verstellbar sind und die Hauptsammelleitungen (1) mit einem Abluftventilator verbunden sind.

2. Rechnergesteuerte Absaugvorrichtung nach Anspruch 1, wobei die Drosselklappen (6), die Hubzüge (7) und der Abluftventilator von einem Leitrechner geregelt werden, der Abluftventilator vom Leitrechner mittels eines Frequenzrichters stufenlos geregelt wird und die Höhe der Module (2) über Hubzüge (7) oberhalb dem Emissionsort vom Leitrechner mittels Infrarot- oder Laserbewegungserfassung stufenlos eingestellt werden.

3. Rechnergesteuerte Absaugvorrichtung nach den Ansprüchen 1 oder 2, wobei die Hauptsammelleitungen (1), die Absaugmodule (2), die Absaughauben (4) und der Absaugventilator aus Edelstahl bestehen.

4. Rechnergesteuerte Absaugvorrichtung nach den Ansprüchen 1 bis 3, wobei die abgesaugte Abluft einem Biofilter oder als Prozeßluft der Kompostierung zugeführt wird.

5. Verwendung einer rechnergesteuerten Absaugvorrichtung gemäß den Ansprüchen 1 bis 4 in geschlossenen oder überdachten Nachrottehallen sowie Intensivrottehallen zur Erzeugung von Kompost aus Bioabfall.
